# EUROPEAN PATENT APPLICATION

(11) **EP 3 695 947 A1**
(43) Date of publication of application: **19.08.2020**
(21) Application number: 18866490.8
(22) Date of filing: 02.10.2018
(51) Int. Cl.: B29C 43/56, B29C 43/02, B29C 43/18, B29C 70/40, C08J 9/32

(54) **METHOD FOR MANUFACTURING FIBER-REINFORCED RESIN MOLDED ARTICLE**

(30) Priority: 11.10.2017 JP 2017197468
(71) Applicant: Monopost Company, Limited, Sapporo-shi, Hokkaido 001-0025 (JP)
(72) Inventor: TORIYAMA Noriyasu, Tagata-gun Shizuoka 419-0114 (JP)
(74) Representative: v. Bezold & Partner Patentanwälte - PartG mbB
(86) International application number: PCT/JP2018/036771
(87) International publication number: WO 2019/073848

(57) **Abstract**

A production method for a fiber-reinforced resin molded object is provided whereby a large apparatus is not used when molding, by heating and pressing, a fiber-reinforced resin base material that includes a matrix resin, a molded object with excellent precision and quality can be obtained, and for which work is simple.

The production method includes arranging, on an inner surface of a lower mold 3, a fiber-reinforced resin base material 1 obtained by impregnating a matrix resin into reinforcing fibers; filling a core space 5 of the mold, in which the fiber-reinforced resin base material 1 is arranged, with a powder mixture 2a that has liquidity and that includes thermally expandable microcapsules and another powder; sealing the lower mold 3 and an upper mold 4; heating at from a heat expansion starting temperature to a maximum expansion temperature of the thermally expandable microcapsules to cause the thermally expandable microcapsules to expand; and pressing the fiber-reinforced resin base material 1 against the inner surface of the lower mold 3 to produce a molded object.

## Description

### Technical Field

The present invention relates generally to a production method for a fiber-reinforced resin molded object and, in particular, relates to a method for producing a fiber-reinforced resin molded object without using an apparatus such as a heat press or an autoclave.

### Background Art

Examples of conventional production methods for fiber-reinforced resin molded objects include a method including arranging, in a mold, a fiber-reinforced resin base material that is obtained by impregnating reinforcing fibers with a liquid thermosetting resin composition, and then heating and pressing or the like to cure the resin; and a method including arranging, in a mold, a fiber-reinforced resin base material obtained by melting a thermoplastic resin and impregnating reinforcing fibers with the melted thermoplastic resin, and molding the fiber-reinforced resin base material by heating and pressing. Other methods include impregnating reinforcing fibers with a thermosetting resin composition and semi-curing the composition or melting a thermoplastic resin and impregnating reinforcing fibers with the melted thermoplastic resin, and then cooling/solidifying to obtain a sheet-like fiber-reinforced resin base material, namely a prepreg sheet or a stampable sheet, and heating and pressing to mold the sheet-like fiber-reinforced resin base material. However, in these methods, a heating and pressing apparatus such as a heat press or an autoclave is required in the step of heating and pressing. Consequently, when producing large molded objects, expansive, large-scale facilities are required and an enormous amount of facilities investment is unavoidable.

As a solution to this problem, Patent Literature 1 proposes a method whereby a large fiber-reinforced resin molded object can be molded without an enormous amount of facilities investment. The method proposed in Patent Literature 1 includes laminating a prepreg sheet on the inner surface of an open mold, covering the entire open mold with a heat-resistant bagging material and then expelling the air between the bagging material and the mold inner surface to create a vacuum state, and heating and pressing while bringing the prepreg sheet into close contact with the inner surface of the open mold to mold the prepreg sheet. However, in this method, the pressure bringing the prepreg sheet into close contact with the mold is due to atmospheric pressure and, as such is, at maximum, about 0.1 MPa. Consequently, the precision and quality of molded objects that can be obtained is limited.

Furthermore, in the aforementioned methods that use an autoclave and the aforementioned methods that use a vacuum, bagging is performed using a bagging material such as nylon film or silicone rubber, and the air inside the bagging material is expelled in order to bring the prepreg sheet, stampable sheet, or similar fiber-reinforced resin base material into close contact with the inner surface of the mold. The bagging material will be damaged if not handled carefully, thereby causing air to leak when expelling the air from inside the bagging material and resulting in insufficient contact between the base material and the inner surface of the mold. In such a case, the pressing by the autoclave will be uneven and, in cases in which a vacuum is used, air leaks occur and sufficient pressing is not possible. Similar care must be taken when handing sealing tape that is used when bagging since leaks are caused by the adhering of debris, oil/dirt, and the like between the inner surface of the mold and the bagging material.

Patent Literature 2 proposes a production method including, when producing a composite molded object that includes a porous core and a surface layer molded from a fiber-reinforced resin composite material into predetermined shape, arranging reinforcing fibers near an inner surface of a mold, introducing a mixture of thermally expandable particles such as thermally expandable microcapsules and a hot-melt matrix resin onto the inner core portion and, thereafter, heating the mold to melt the matrix resin and cause the thermally expandable particles to foam and expand and, at the same time, molding the surface layer. However, in this method, due to the expansion force of the thermally expandable particles, the molding must be performed while impregnating the reinforcing fibers with the heat-melted matrix resin, and the setting of the heating conditions is difficult. Moreover, a complex configuration is required in which a separation layer formed from a porous material is provided that allows the molten matrix resin to pass through while preventing the expanded particles of the thermally expandable particles from passing through.

Patent Literature 3 proposes a method for molding a composite material, whereby a molded object with high strength can be molded, the molding method including forming a laminate in which thermally expandable microcapsules (thermally expandable microspheres) are interposed between a plurality of prepregs obtained by impregnating fibers with a thermosetting resin or a thermoplastic resin, and heating the laminate, thereby causing the thermally expandable microcapsules to expand and the prepregs to cure. In this molding method, prepregs in which the fibers are impregnated with the resin in advance are used. As such, a high viscosity resin can be used as the matrix resin, the plastic strength of the molded object can be improved, and the thermally expandable microcapsules can be prevented from mixing in the matrix. Furthermore, the density of the composite material can be lowered due to the thermally expandable microcapsules expanding. Due to this, the second moment of the molded object can be increased and bending strength can be improved. Thus, this method improves the bending strength of the molded object by using the thermally expanded microcapsules as a constituent of the molded object.

### Citation List

### Patent Literature

Patent Literature 1: Unexamined Japanese Patent Application Kokai Publication No. 2004-276471
Patent Literature 2: Unexamined Japanese Patent Application Kokai Publication No. H03-288629
Patent Literature 3: Unexamined Japanese Patent Application Kokai Publication No. 2015-112805

### Summary of Invention

### Technical Problem

An objective of the present disclosure is to provide a production method for a fiber-reinforced resin molded object whereby a large apparatus is not used when molding, by heating and pressing, a fiber-reinforced resin base material that includes a matrix resin, a molded object with excellent precision and quality can be obtained, and for which work is simple.

### Solution to Problem

The production method for a fiber-reinforced resin molded object of the present disclosure includes arranging, on an inner surface of a mold, a fiber-reinforced resin base material obtained by impregnating reinforcing fibers with a matrix resin; filling a core space of the mold, on which the fiber-reinforced resin base material is arranged, with a powder mixture that has liquidity and that includes thermally expandable microcapsules and another powder; sealing the mold; heating at from a heat expansion starting temperature to a maximum expansion temperature of the thermally expandable microcapsules to cause the thermally expandable microcapsules to expand; and pressing the fiber-reinforced resin base material against the inner surface of the mold.

It is preferable that a content of the thermally expandable microcapsules in the powder mixture is from 20 to 80 wt%, and that the powder other than the thermally expandable microcapsules is an organic powder, an inorganic powder, chopped fibers, or a mixture thereof. It is preferable that the core space of the mold, on which the fiber-reinforced resin base material is arranged, is filled with 250 g to 600 g of the powder mixture per 1 liter volume of the core space. By filling with this amount of the powder mixture, the powder mixture can be made to occupy from 25 to 60% of the volume of the core space. In this case, the volume occupied fluctuates depending on the apparent specific gravity of the powder, and can be adjusted by increasing or decreasing the filling amount.

Furthermore, it is preferable that the work of bringing the fiber-reinforced resin base material into close contact with the inner surface of the mold is performed by expelling the air between the fiber-reinforced resin base material arranged on the inner surface of the mold and the inner surface of the mold. With such a configuration, the fiber-reinforced resin base material can easily be brought into close contact with the inner surface of the mold. With regards to this work of bringing into close contact, a release material is arranged between the powder mixture and the fiber-reinforced resin base material arranged on the inner surface of the mold, the mold is closed and, thereafter, the air between the fiber-reinforced resin base material and the inner surface of the mold is expelled. With such a configuration, it is possible to bring the fiber-reinforced resin base material into close contact with the inner surface. In this case, a film such as a fluorine resin film or a silicone film is used as the release material. By using the release material, it is possible to easily remove the powder mixture, which is expanded due to heating, from the fiber-reinforced resin molded object.

The thermally expandable microcapsules are a powder that includes particles formed by encapsulating a volatile solvent inside a shell made from a thermoplastic resin. The thermally expandable microcapsules have an average particle size of 5 to 300 µm, and preferably of 5 to 150 µm. Examples of the thermoplastic resin that forms the shell include polyvinylidene chloride resins, acrylic resins, and AN copolymer resins, and examples of the volatile solvent include low-boiling hydrocarbons.

As the powder other than the thermally expandable microcapsules in the powder mixture, an organic powder or an inorganic powder having an average particle size of 1 to 200 µm, chopped fibers having a fiber diameter of 1 to 20 µm and a length cut to 0.5 to 5 mm and preferably to 0.5 to 3 mm, or a mixture thereof is used. It is necessary that the powder mixture has liquidity because, in cases in which the powder mixture does not have liquidity, the filling work is difficult, and there are problems in transmitting the expansion force of the thermally expandable microcapsules to the fiber-reinforced resin base material. The phrase "has liquidity" means that the powder mixture can slide down a slope that is less than 90°, and can flow.

By heating the thermally expandable microcapsules, the thermoplastic resin forming the shell softens, and the encapsulated volatile solvent evaporates and vaporizes, thereby increasing the pressure inside the thermally expandable microcapsules. As a result, the volume of the thermally expandable microcapsules increases 50-times or more. In the present disclosure, the molded object is produced as a result of the fiber-reinforced resin base material being pressed against the inner surface of the mold due to the expansion force generated by the thermally expandable microcapsules being heated. Additionally, as the temperature increases, the volume of the thermally expandable microcapsules expands. However, at a certain temperature and higher, the thickness of the shell becomes thin, the gas of the volatile solvent permeates and diffuses out of the microcapsules, and the microcapsules contract. The temperature at which the microcapsules start to expand is called the "heat expansion starting temperature", and the temperature at which the volume of the microcapsules is greatest is called the "maximum expansion temperature." Since the thermally expandable microcapsules have these properties, the pressure inside sealed space can be raised by filling the sealed space with un-expanded (un-heated) thermally expandable microcapsules, and heating to from the heat expansion starting temperature to the maximum expansion temperature, and the pressure can be raised to 0.5 MPa or higher. Since the pressure in the shells of the thermally expandable microcapsules is, at maximum expansion, about 3 MPa, it is impossible to raise the pressure to 3 MPa. However, the internal pressure in the sealed space is typically 0.1 to 0.6 MPa, and it is possible to raise the pressure to 1 MPa or higher by increasing the amount of the thermally expandable microcapsules that the sealed space is filled with.

In the present disclosure, the thermally expandable microcapsules are mixed and used with another powder. The present inventors discovered that, compared to cases in which thermally expandable microcapsules are used alone, by filling the core space of the fiber-reinforced resin base material with this powder mixture and heating, the raising of the pressure due to the heating can be performed in a shorter amount of time, and the force pressing the fiber-reinforced resin base material against the inner surface of the mold can be maintained. Thus, the present inventors arrived at the present disclosure.

Preferable examples of the reinforcing fibers that can be used in the fiber-reinforced resin base material include glass fibers, carbon fibers, aramid fibers, and the like. These fibers can be aligned in a single direction and configured as fiber bundles such as rovings or yarn, or the fibers can be woven and configured as cloth. The fiber bundles or the cloth can be impregnated with the matrix resin. Furthermore, the fibers can be cut and configured as chopped fibers, and mixed with the matrix resin to form the fiber-reinforced resin base material.

Various types of thermosetting resins and thermoplastic resins can be used as the matrix resin used in the fiber-reinforced resin base material. Resin compositions that include a curing agent are typically used as thermosetting resins. Moreover, liquid resin compositions are frequently used as thermosetting resins. Such thermosetting resins can be impregnated into reinforcing fibers and formed into a fiber-reinforced resin base material that includes a matrix resin. In this case, the thermosetting resin composition can be semi-cured and used as a prepreg sheet. In addition, a variety of types of prepreg sheets are commercially available, and fiber-reinforced resin base materials and stampable sheets that use thermoplastic resin as a matrix resin are commercially available. These commercially available products may also be used.

### Advantageous Effects of Invention

With the present disclosure, a fiber-reinforced resin molded object can be produced by filling the core space of a mold in which a fiber-reinforced resin base material is arranged with a powder mixture that includes thermally expandable microcapsules, sealing the mold, and causing the mold to reach a predetermined temperature. As such, the production method of the present disclosure is a method whereby a molded object with excellent precision and quality can be obtained without using a large apparatus, the need for careful operations such the bagging in the conventional technology is eliminated, work is simple, and stable industrial products can be produced.

### Brief Description of Drawings

FIG. 1 is an explanatory cross-sectional view illustrating a production method according to the present disclosure;
FIG. 2 is an explanatory cross-sectional view illustrating a state in which an expanded powder mixture is pressing a fiber-reinforced resin base material;
FIG. 3 is an explanatory cross-sectional view illustrating a production method in which a release material is not arranged between the powder mixture and the fiber-reinforced resin base material;
FIG. 4 is an explanatory cross-sectional view of FIG. 3, illustrating a state in which the expanded powder mixture is pressing the fiber-reinforced resin base material;
FIG. 5 is an explanatory cross-sectional view illustrating a production method using a mold that includes an inner surface structure that is convex toward the inside of the mold;
FIG. 6 is an explanatory cross-sectional view illustrating a method for molding by bringing the fiber-reinforced resin base material into close contact with the inner surfaces of a bottom mold and an openable-closeable top mold, in which the top mold is open; and
FIG. 7 is an explanatory cross-sectional view of FIG. 6, illustrating a state in which the top mold is closed.

### Description of Embodiments

Hereinafter, embodiments of the present disclosure are described in detail.

As described above, in the present disclosure, a fiber-reinforced resin molded object is produced by arranging a fiber-reinforced resin base material on an inner surface of the mold, filling a core space of the mold with a powder mixture that has liquidity and that includes thermally expandable microcapsules and another powder, sealing the mold, and heating at from a heat expansion starting temperature to a maximum expansion temperature of the thermally expandable microcapsules to cause the thermally expandable microcapsules to expand and press the fiber-reinforced resin base material against the inner surface of the mold.

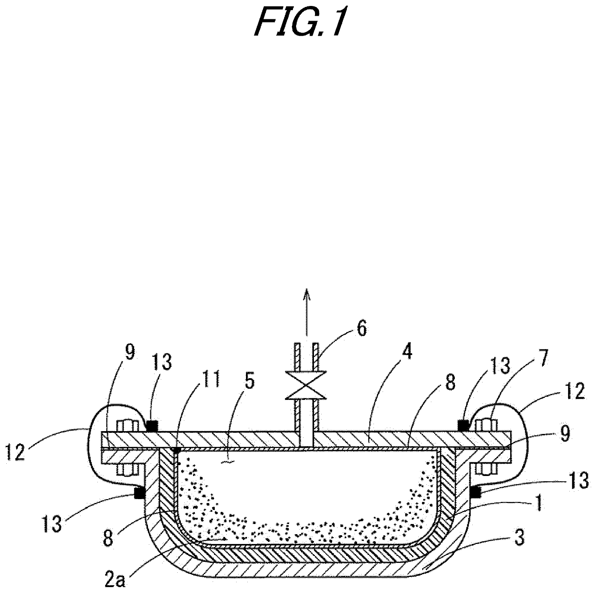

FIG. 1 illustrates the production method of the present disclosure. In the production method illustrated in FIG. 1, a fiber-reinforced resin base material 1 is arranged in close contact with a lower mold 3, a release material 8 such as a fluorine resin film is arranged in close contact with the inner surface of the fiber-reinforced resin base material 1, a core space 5 on the inner side of the release material 8 is filled with an un-expanded powder mixture 2a that includes un-expanded thermally expandable microcapsules and another powder, an opening of the lower mold 3 is covered by an upper mold 4, and the molds are sealed by a fastening member 7 such as a bolt and nut with a rubber packing material 9 interposed between the lower mold 3 and the upper mold 4 or, alternatively, instead of using the rubber packing material 9, the area around the fastening portion is bagged using a bagging material 12 and a sealing material 13 as illustrated in FIG. 1, and the air between the release material 8 and the inner surface of the lower mold 3 is vacuum suctioned through a vacuum suction port 6 provided in the upper mold 4 (note that, in FIG. 1, both a case in which the rubber packing material 9 is used and a case in which the bagging material 12 is used are illustrated, but it is sufficient that one of these methods is used). In this case, as illustrated in FIG. 1, prior to covering the opening of the lower mold 3 with the upper mold 4, the end of the release material 8 is thoroughly sealed using a sealing material 11 such as sealing tape so as to prevent air leaks, thereby increasing the sealing between the fiber-reinforced resin base material 1 and the lower mold 3, and enabling reliable vacuum suctioning.

A valve of the vacuum suction port 6 may be closed when the fiber-reinforced resin base material 1 is brought into sufficiently close contact with the inner surface of the lower mold 3, but it is preferable that the vacuum suctioning is continued. In this method, the fiber-reinforced resin base material 1 is arranged in close contact with the inner surface of the lower mold 3 due to the vacuum suctioning and, then, the fiber-reinforced resin base material 1 is molded by pressing force resulting from the expansion force of the powder mixture 2a with which the core space 5 is filled. As such, the need for careful work, such as the bagging operation in the conventional technology, is eliminated.

It is preferable that a heat resistant silicon rubber or fluorine rubber be used as the rubber packing material 9 used in the fastening of the upper mold 4 and the lower mold 3, but the present disclosure is not limited thereto. As described above, as the sealing between the upper mold 4 and the lower mold 3, it is possible to bag and seal the molds using the bagging material 12 and the sealing material 13 as depicted in the fastening portion of FIG. 1.

In FIG. 1, the core space 5 is not completely filled with the un-expanded powder mixture 2a but, rather, the un-expanded powder mixture 2a occupies a portion of the core space 5. By setting a filling amount to 250 to 600 g per 1 L of volume of the core space 5, and including from 20 to 80 wt% of the expandable microcapsules in the powder mixture 2a, the internal pressure of the core space 5 after heating can be set to 0.1 to 0.6 MPa. Moreover, as described above, even higher internal pressures can be set by adjusting the conditions.

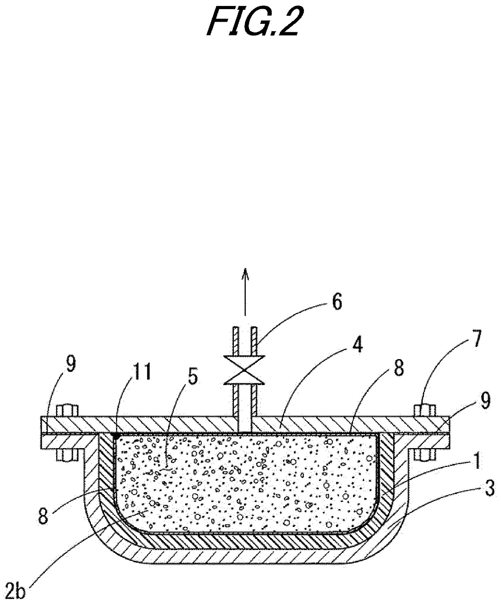

FIG. 2 illustrates a state in which the entire mold that contains the fiber-reinforced resin base material 1 and the powder mixture 2a is heated to from a heat expansion starting temperature to a maximum expansion temperature of the thermally expandable microcapsules, the thermally expandable microcapsules included in the powder mixture 2a are caused to expand, and the entire core space 5 is tightly filled with an expanded powder mixture 2b. In this state, the fiber-reinforced resin base material 1 is pressed against the inner surface of the lower mold 3 due to the pressure caused by the expansion of the expanded powder mixture 2b and, as a result the fiber-reinforced resin base material 1 is molded into a molded object that conforms to the shape of the inner surface. As described above, the internal pressure of the core space 5 after expansion can be set to 0.1 to 0.6 MPa or higher. As such, pressing force can be applied that is a few times to 10-times or more compared to the conventional method in which the air between the bagging material and the mold inner surface is expelled to create a vacuum state, and the prepreg sheet is brought into close contact with the inner surface of the open mold and, at the same time, is molded by heating and pressing using atmospheric pressure. As a result, a molded object that faithfully conforms to the inner surface shape of the lower mold 3 can be produced without using an apparatus such as an autoclave.

The pressure generated due to the expansion of the thermally expandable microcapsules can be adjusted by changing the content of the thermally expandable microcapsules in the powder mixture and/or the filling amount of the powder mixture with which the core space 5 is filled. Various types of thermally expandable microcapsules are commercially available. Examples thereof include low-mid temperature expanding types that have a heat expansion starting temperature of 80°C to 110°C and a maximum expansion temperature of 115°C to 140°C, mid-high temperature expanding types that have a heat expansion starting temperature of 115°C to 140°C and a maximum expansion temperature of 170°C to 200°C, and super-high temperature expanding types that have a heat expansion starting temperature of 180°C to 230°C and a maximum expansion temperature of 210°C to 275°C. Therefore, it is possible to select the type of thermally expandable microcapsules and, in turn, select the molding temperature in consideration of the appropriate molding temperature of the fiber-reinforced resin base material.

In the present disclosure, the core space 5 is not filled by thermally expandable microcapsules alone but, rather, is filled with a mixture of thermally expandable microcapsules and another powder. As described above, reasons for this configuration include that, compared to cases in which thermally expandable microcapsules are used alone, the raising of the pressure due to heating can be performed in a shorter amount of time, and the force pressing the fiber-reinforced resin base material against the inner surface of the mold can be maintained.

As illustrated in FIGS. 1 and 2, in the present disclosure, the lower mold 3 is provided with a cavity for filling the core space 5 with the powder mixture 2a and performing the molding. Since there is no need to provide the core in the upper mold 4 and it is sufficient that the upper mold 4 is capable of sealing the core space 5, the upper mold 4 may be implemented as a flat lid and the molds may be fastened and sealed by a fastening member.

In an embodiment such as that illustrated in FIGS. 1 and 2 in which the release material 8 is used, it is not only easier to remove the expanded powder mixture from the interior of the molded object after the heating and molding, but in cases in which the matrix resin used in the fiber-reinforced resin base material 1 is a prepreg that is a liquid to paste-like thermosetting resin, advantageous effects are obtained such as, when filling with the powder mixture 2a, the particles of the powder mixture are prevented from entering into the fiber-reinforced resin base material 1, and the work of filling with the powder mixture is made smoother.

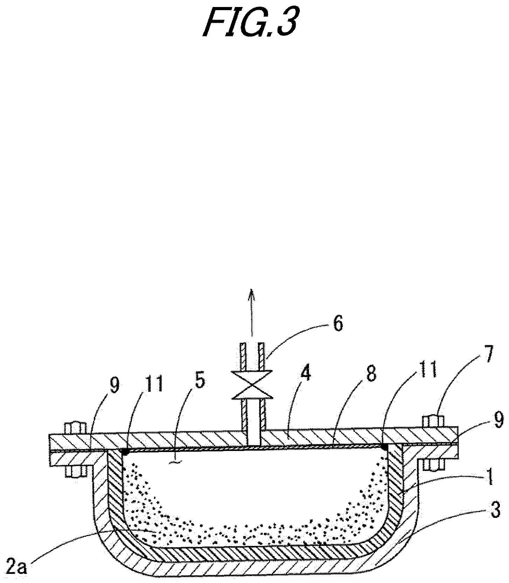

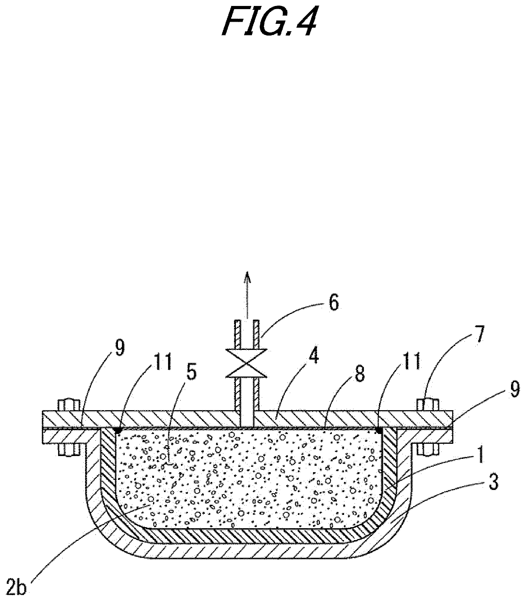

In the embodiment illustrated in FIGS. 3 and 4, when arranging the fiber-reinforced resin base material 1 in close contact with the inner surface of the lower mold 3, the release material 8 does not cover the entire surface of the fiber-reinforced resin base material 1. Rather, the release material 8 connects between the fiber-reinforced resin base material 1 and the vacuum suction port 6 and is for enabling the air between the fiber-reinforced resin base material 1 and the inner surface of the lower mold 3 to be vacuum suctioned through the vacuum suction port 6 provided in the upper mold 4. The release material 8 and the fiber-reinforced resin base material 1 are sealed by the sealing material 11, the air between the fiber-reinforced resin base material 1 and the mold inner surface is suctioned, and the fiber-reinforced resin base material 1 is arranged in close contact with the mold inner surface. In this case, as illustrated in the drawings, the rubber packing material 9 is interposed between the upper and lower molds at the fastening portion, and the upper and lower molds are fastened using the fastening member 7. As a result, the fastening portion of both molds is sealed, the sealing of the mold interior is improved, and the vacuum suctioning can be reliably performed.

FIG. 4 illustrates a state in which the thermally expandable microcapsules included in the powder mixture 2a are caused to expand, and the entire core space 5 is tightly filled with the expanded powder mixture 2b. In this case, the fiber-reinforced resin base material 1 is pressed and heated and formed into a molded object. In this embodiment, a fiber-reinforced resin molded object, which is filled with and bonded to the expanded powder mixture 2b included therein, is obtained. The interior of the obtained fiber-reinforced resin molded object is formed from a porous body.

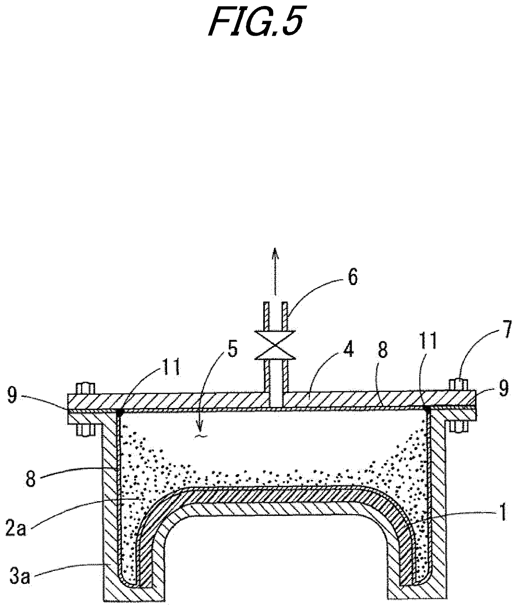

FIG. 5 illustrates a production method for a molded object that uses, as the lower mold, a lower mold 3a that has an inner surface structure that is convex toward the inside of the mold. This production method is preferably used in the production of molded objects for which the surface structure of the inner surface of the molded object is important. Except for the shape of the mold differing, this production method is the same as the production method and process illustrated in FIGS. 1 and 2. Accordingly, this production method can also be applied to the method illustrated in FIGS. 3 and 4.

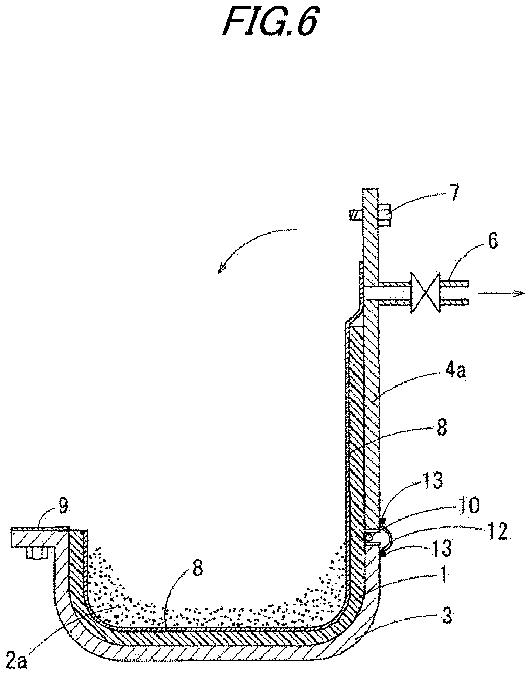

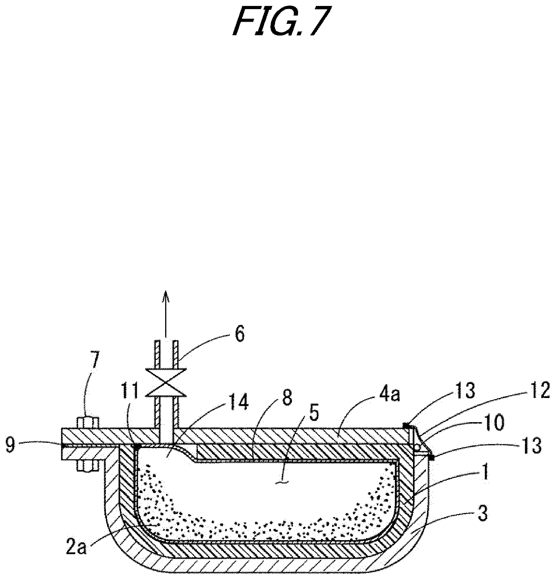

The shape of the lower mold is not particularly limited, and lower molds of various shapes can be used by appropriately designing the lower mold according to the shape of the molded object to be produced. Furthermore, as illustrated in FIGS. 6 and 7, it is possible to mold using a fiber-reinforced resin base material 1 that has a larger area than the inner surface of the lower mold 3 by bringing the base material 1 into close contact with the inner surface of the upper mold 4a as well. As illustrated in the drawings, the upper mold 4a is connected to the lower mold 3 in an openable/closeable manner by a hinge 9. First, as illustrated in FIG. 6, the fiber-reinforced resin base material 1 is continuously arranged from the inner surface of the lower mold 3 to the inner surface of the upper mold 4a. In this case, the connecting portion by the hinge 10 is bagged and sealed using the bagging material 12 and the sealing material 13. Furthermore, as in FIG. 1, after covering the surface of the arranged fiber-reinforced resin base material 1 with the release material 8, the core space 5 is filled with the un-expanded powder mixture 2a and, then, the upper mold 4a is closed, the end of the release material 8 is sealed by the sealing material 11, the rubber packing material 9 is interposed at the fastening portion between the upper mold 4a and the lower mold 3, and the upper mold 4a and the lower mold 3 are fastened by the fastening member 7. After fastening the molds, the air between the fiber-reinforced resin base material 1 and the inner surfaces of the upper and lower molds 3 and 4a is suctioned through the vacuum suction port 6. As a result, as illustrated in FIG. 7, the fiber-reinforced resin base material 1 can be brought into close contact with the inner surface of the molds, and a state can be created in which the sealed space of the fiber-reinforced resin base material 1 is filled with the un-expanded powder mixture 2a. In this state, the entire mold that contains the fiber-reinforced resin base material 1 and the powder mixture 2a is heated to from the heat expansion starting temperature to the maximum expansion temperature of the thermally expandable microcapsules, thereby causing the powder mixture 2a to expand and press the fiber-reinforced resin base material 1 against the inner surfaces of the upper and lower molds 3 and 4a, thereby molding the fiber-reinforced resin base material 1.

In any of the methods described above, the expanded powder mixture is present in the core space of the molded object. After heating and the fiber-reinforced resin molded object is produced, this expanded powder mixture may be removed, or left as-is to obtain a molded object that includes an interior that is a porous body. With a hollow molded object such as that illustrated in FIGS. 6 and 7, the expanded powder mixture may be removed through the opening 14 illustrated in FIG. 7, or may be left as-is to obtain a hollow molded object that has an interior that is a porous body. When removing the expanded powder mixture, removal can be facilitated by setting to a temperature that is the maximum expansion temperature of the thermally expandable microcapsules or higher, thereby causing the expanded capsules to contract.

Examples of the powder in the powder mixture other than the thermally expandable microcapsules include, as organic powders, various grain flours (wheat flour, rice flour, soy flour, and the like), starches (starch flour, corn starch, and the like), fish flour, wasabi flour, wood flour, bamboo flour, and the like; and, as inorganic powders, powders of sodium chloride, calcium carbonate, silica, alumina, talc, gypsum, silica sand, glass, and the like; and pulverized powders of thermosetting resin products such as FRP. Chopped fibers may also be used as the other powder. Examples thereof include chopped fibers obtained by cutting various types of fibers to a length of 1 to 3 mm. Examples of organic powders that are used in foods and animal feed are given above. These organic powders can be easily disposed of after use, or can be reused. Moreover, a powder that does not impair the liquidity of the powder mixture by melting or the surface becoming sticky at the molding temperature is used as the powder other than the thermally expandable microcapsules.

As described above, various types of thermosetting resins and thermoplastic resins can be used as the matrix resin used in the fiber-reinforced resin base material. Examples of the thermosetting resins include unsaturated polyester resins, epoxy resins, phenol resins, vinyl ester resins, and the like. Resin compositions that include a curing agent are typically used as thermosetting resins. Moreover, liquid resin compositions are frequently used as thermosetting resins. Such thermosetting resins can be impregnated into reinforcing fibers and formed into a fiber-reinforced resin base material that includes a matrix resin. In this case, the thermosetting resin composition can be semi-cured and used as a prepreg sheet. In addition, a variety of types of prepreg sheets are commercially available, and fiber-reinforced resin base materials and stampable sheets that use a thermoplastic resin as a matrix resin are commercially available. These commercially available products may also be used.

Examples of mold heating means that can be used include known means such as a method in which the mold is provided with an electric heater or a heat medium conduit, a high-frequency induction heating method, and a radiation heating method. Furthermore, the mold may be provided with cooling means in which cooling water or cooling oil is switched to a heat medium and made to flow through the conduit. Molded objects with glossier surfaces can be obtained by using a mold that is provided with cooling means instead and heating means.

Preferable examples of reinforcing fibers that can be used in the fiber-reinforced resin base material include glass fibers, carbon fibers, aramid fibers, and the like, but boron fibers, ceramic fibers, silicon carbide fibers, and the like may also be used.

Examples of the thermoplastic resins include polypropylene (PP), polyethylene terephthalate (PET), polybutylene terephthalate (PBT), polyamide (PA), polyacetal (POM), polycarbonate (PC), acrylonitrile-butadiene-styrene copolymer (ABS), polyphenylene sulfide (PPS), polyetheretherketone (PEEK), and the like.

However, from the perspective of the waste treatment of the fiber-reinforced resin molded object, it is possible to facilitate the treatment of waste by using biodegradable fibers and biodegradable resin as the reinforcing fibers and the thermoplastic resin of the fiber-reinforced resin base material.

Hereinafter examples are given to specifically describe the present disclosure.

### Example 1

A carbon fiber-reinforced epoxy resin prepreg, created by impregnating a carbon fiber cloth with a 130°C curing type epoxy resin varnish, was used as the fiber-reinforced resin base material, and a powder mixture including 50 wt%, respectively, of thermally expandable microcapsules (Expancel (registered trademark, manufactured by Expancel) 031-40DU, heat expansion starting temperature 80 to 90°C, maximum expansion temperature 120 to 135°C, average particle size 10 to 16 µm) and dried potato starch (average particle size 30 µm) was used as the powder mixture. A molded object was produced according to the method illustrated in FIGS. 1 and 2.

First, the fiber-reinforced resin base material described above was arranged on the inner surface of the lower mold, and a fluorine resin film was arranged, as a release film, on the fiber-reinforced resin base material. The core space on the inner side of the release film was filled with 280 g of the powder mixture per 1 liter volume of the space, and the end of the release film was sealed using the sealing tape. Then, the lower mold was covered by the upper mold, the upper mold and the lower mold were sealed by interposing the rubber packing material at the fastening portion, and the air between the release film and the lower mold was vacuum suctioned. As a result, the fiber-reinforced resin base material was arranged in close contact with the inner surface of the lower mold. Next, molding was performed by heating the mold in which the fiber-reinforced resin base material is arranged. Specifically, the heating was started by holding the temperature of the core space at 80°C for 30 minutes and, then, holding the mold temperature at 130°C for 60 minutes. During the heating, the internal pressure of the core space was 0.3 to 0.5 MPa. After cooling, the molded object was removed from the mold, and the release film and the expanded powder mixture in the core space were removed. Thus, a molded obj ect with a shape faithfully conforming to the inner surface of the lower mold was obtained.

When holding the mold temperature at 130°C, the core space is filled with a mixed foamed body formed from the expanded powder mixture. Moreover, this mixed foamed body functions as a heat insulating material. As such, care must be taken not to apply more heat energy than is necessary to the powder mixture, and the set temperature must be maintained. If the temperature of the powder mixture exceeds the set temperature, the expanded thermally expandable microcapsules will begin to contract. Therefore, the set temperature was maintained while paying particular attention to temperature rises near the mold. In cases in which the object temperature in the mold was more likely to rise due to the shape or the like of the mold even when the 130°C curing type epoxy resin varnish was used, excellent results were obtained using, as the thermally expandable microcapsules, Expancel (registered trademark, manufactured by Expancel) 053-40DU, which has a maximum expansion temperature of 138 to 146°C.

### Example 2

Example 2 is the same as Example 1 with the exception of holding the temperature of the core space at 130°C for 60 minutes and then raising the temperature about 10 to 15°C, thereby causing the expanded microcapsules to contract. After cooling, the molded object was removed from the mold. Thus, a molded object similar to that of Example 1 was obtained.

### Example 3

Example 3 is the same as Example 1 with the exception that the fiber-reinforced resin base material was not covered by the release film. In Example 3, a molded object was obtained using the same heating operations as in Example 1, in accordance with the method illustrated in FIGS. 3 and 4. The interior of this molded object was filled with a porous substance.

### Example 4

The same operations described for Example 1 were performed in Example 4, with the exceptions that a glass fiber-reinforced polypropylene sheet obtained by impregnating plain-woven glass cloth with polypropylene was used as the fiber-reinforced resin base material, Expancel ((registered trademark, manufactured by Expancel) 092-40DU, heat expansion starting temperature 123 to 133°C, maximum expansion temperature 170 to 180°C, average particle size 10 to 16 µm) was used as the thermally expandable microcapsules, and, as the heating conditions, the heating was started by holding the temperature of the core space at 125°C for 30 minutes and, then, holding the mold temperature at 160°C for 60 minutes. A molded object with a shape that faithfully conformed to the inner surface of the lower mold was obtained.

### Reference Signs List

- 1: Fiber-reinforced resin base material
- 2a: Powder mixture (un-expanded)
- 2b: Powder mixture (expanded)
- 3, 3a: Lower mold
- 4, 4a: Upper mold
- 5: Core space
- 6: Vacuum suction port
- 7: Fastening member
- 8: Release material
- 9: Rubber packing material
- 10: Hinge
- 11: Release material sealing material
- 12: Bagging material
- 13: Bagging sealing material
- 14: Opening

## Claims

1. A production method for a fiber-reinforced resin molded object, the method comprising:
arranging, on an inner surface of a mold, a fiber-reinforced resin base material obtained by impregnating reinforcing fibers with a matrix resin; filling a core space of the mold, in which the fiber-reinforced resin base material is arranged, with a powder mixture having liquidity and including thermally expandable microcapsules and another powder; sealing the mold; heating at from a heat expansion starting temperature to a maximum expansion temperature of the thermally expandable microcapsules to cause the thermally expandable microcapsules to expand; and heat pressing the fiber-reinforced resin base material.

2. The production method for a fiber-reinforced resin molded object according to claim 1, wherein a content of the thermally expandable microcapsules in the powder mixture is from 20 wt% to 80 wt%.

3. The production method for a fiber-reinforced resin molded object according to claim 1 or 2, wherein the core space of the mold in which the fiber-reinforced resin base material is arranged is filled with 200 g to 600 g of the powder mixture per 1 liter volume of the core space.

4. The production method for a fiber-reinforced resin molded object according to any one of claims 1 to 3, wherein a release material is arranged between the powder mixture and the fiber-reinforced resin base material arranged on the inner surface of the mold, the mold is sealed and, thereafter, air between the fiber-reinforced resin base material and the inner surface of the mold is expelled, thereby bringing the fiber-reinforced resin base material into close contact with the inner surface of the mold.

5. The production method for a fiber-reinforced resin molded object according to any one of claims 1 to 4, wherein the powder other than the thermally expandable microcapsules includes an organic powder, an inorganic powder, chopped fibers, or a mixture thereof.
